# EUROPEAN PATENT SPECIFICATION

(11) **EP 1 231 097 B1**
(45) Date of publication and mention of the grant of the patent: **11.09.2013**
(21) Application number: 02002440.2
(22) Date of filing: 01.02.2002
(51) Int. Cl.: B60M 1/28

(54) **Method to regulate the tension for stretching machines and relative apparatus**
Methode zur Spannungsregelung in Seilziehmaschinen und entsprechender Apparat
Méthode de régulation de tension pour machines de pose de lignes et appareil associé

(30) Priority: 09.02.2001 IT UD010023
(43) Date of publication of application: 14.08.2002
(73) Proprietor: Tesmec SpA, 20123 Milano (IT)
(72) Inventor: Belluschi, Antonio, 24047 Treviglio (BG) (IT)
(74) Representative: Petraz, Gilberto Luigi

(56) References cited:
- EP-A- 0 861 752
- DE-C- 4 334 063

## Description

### FIELD OF THE INVENTION

The invention concerns a method to regulate the tension for stretching machines, and also the apparatus suitable to perform the method.

The invention is applied in the production of equipment for laying and stretching cables, electric conductors or optical fibres on respective aerial or underground supports, in order to achieve high, medium or low tension electric lines, signal-carrying lines or aerial contact and carrying lines for railways and tramways.

Document EP 861 752 discloses a device having the features of the preamble of the main claims 1 and 7.

### BACKGROUND OF THE INVENTION

Stretching equipment to achieve aerial or underground lines normally comprise means to feed the conductors, cables, etc., singly or in bundles, which have to be laid, for example reels assembled on supports called retractors/rewinders, a braking assembly, normally called "brake", and a traction assembly normally called "winch".

The function of the braking assembly is to determine the unwinding tension of the conductors from the feed means and to keep the desired tension during the laying of the conductors, cables, optical fibres, etc., while the winch determines the speed of translation.

When employed to make electric lines, the usual stretching procedure provides that the feed means are arranged fixed at one end of the section from which stretching begins, behind the braking assembly, while the winch, that is, the traction station, is positioned at the other end of the section.

To lay the electric lines for railways or tramways, a (drawn or self-propelled) wagon is normally employed, on which both the feed means (reels) and also the braking/ traction assembly used to stretch the conductors are mounted. The "winch" function is performed by the locomotive which draws or pushes the wagon thus equipped.

In all applications of conventional-type stretching machines, a problem which those businessmen operating in the field greatly complain of is the regulation of the value of tension of the conductors.

In fact, current stretching machines do not comprise means to finely regulate the tension of the conductors during laying; the tension is set at the start of the operation and is not directly monitored during the operation; any operations to regulate the tension are made after laying, using jaw-type tensioners, jacks or other suitable type.

This subsequent tensioning entails an increase in time, labor costs, possible risks to the safety of the operator and other disadvantages.

There is therefore in this field a great need for the introduction and development of methods and apparatuses suitable to ensure a precise and accurate regulation of the tension, thus avoiding the need for auxiliary, subsequent interventions.

The present Applicant has devised and embodied this invention to meet this requirement and to obtain further advantages as shown hereafter.

### SUMMARY OF THE INVENTION

The invention is set forth and characterized in the respective main claims, while the dependent claims describe other characteristics of the main embodiment.

The purpose of the invention is to achieve a method and an apparatus to regulate the tension, applicable to machines for stretching cables, conductors and optical fibres, both aerial and underground, so as to permit an automatic, feedback action, such as to ensure the desired conditions of tension are maintained.

The invention is applied substantially to every type of laying machine, such as for example winches, brakes and winch-brakes, assembled on their own frames or on movable means, on which cables, conductors and optical fibres are wound to carry out the stretching.

As we know, laying machines consist of at least a grooved drum (capstan), normally two, with its own supporting shaft and equipped on the circumference with one or more throats inside which the cables, conductors or optical fibres to be stretched are wound.

The drums are associated with motion transmission means which make them rotate at the programmed speed of unwinding, impressing thereon or absorbing the set torque, in order to ensure the correct tensioning of the cables, conductors or optical fibres to be stretched.

The method to regulate the tension according to the invention provides the following steps:
- during the laying of the conductors, a plurality of electric signals arriving from at least one of the braking, traction or feed assemblies are detected,
- these electric signals are sent to a processing unit suitable to calculate the actual value of tension of the conductors during stretching,
- this actual value is compared with the value pre-set at the start of the stretching operation,
- a feedback action is made on at least one of the braking, traction and feed assemblies to correct possible discrepancies between the tension value found and the pre-set value.

In a first embodiment, this feedback action is completely automatic and is managed by said processing unit without requiring any action on the part of the operator.

In another embodiment, the feedback action is at least partly manual, and is achieved by means of the action of an operator on command systems which act on said drive members of the braking, traction and feed assemblies, until the operator finds that the difference between the set value and the actual value has been cancelled.

According to the invention, an electric signal to detect the tension is generated by at least a detector element arranged in cooperation with the shaft of at least one drum of the braking assembly and/or the traction assembly, if included; this detector element is able to detect the tension of the conductor being unwound by measuring the force of thrust, torsion or flexion which acts on the shaft.

In a preferential embodiment, said detector element consists of at least a load cell associated with the shaft of at least one drum of the braking assembly and/or the traction assembly. According to a variant, said tension detector element consists of means suitable to detect the flexion or torsion of the shaft during the unwinding of the relative conductor.

Another electric signal to detect the tension is generated, in the preferential embodiment of the invention, by at least a device to detect the speed of rotation of the braking assembly and/or the traction assembly.

Another electric signal to detect the tension is generated by means to measure how full the feed means are, for example a reel or similar, which feed the cable, conductor, optical fibres, etc. being unwound.

All these signals, together with the signal relating to the set value of the desired tension of the conductor to be stretched, are sent to the processing unit; this processing unit calculates the difference between the value detected and the set value, and acts in feedback on the command circuit of the braking assembly and/or the traction assembly until the difference has been cancelled.

According to a variant, this processing unit acts, or also acts, on the means which make the feed means rotate, increasing or reducing the speed of rotation of the reels.

In one embodiment, the tension is detected and the feedback action is performed continuously; according to a variant, said detection and intervention occur periodically at a defined period which can be regulated during the initial setting.

### BRIEF DESCRIPTION OF THE DRAWINGS

These and other characteristics of the invention will be apparent from the description of a preferential form of embodiment of the invention, given as a non-restrictive example with reference to the attached drawings wherein:
Fig. 1 is a schematic view of a stretching machine for aerial lines for railways or tramways, on which the method to regulate the tension according to the invention can be adopted;
Fig. 2 is a schematic view of a stretching machine for aerial electric lines;
Fig. 3 is a block diagram which shows the method according to the invention.

### DETAILED DESCRIPTION OF PREFERENTIAL EMBODIMENT

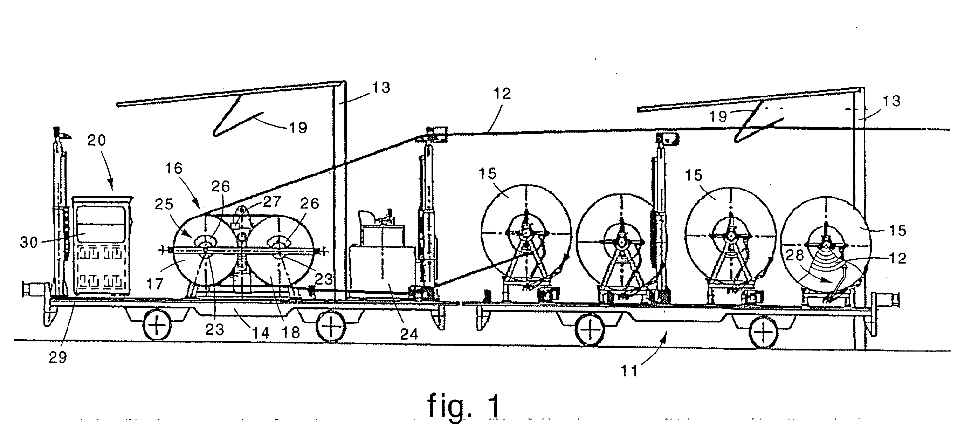

Fig. 1 shows a stretching machine, denoted in its entirety by the reference number 11, suitable to lay aerial lines for railways or tramways. To be more exact, the stretching machine 11 is suitable to stretch conductors 12 to arrange them on suitably distanced supports 13 equipped with respective supporting couplers 19.

The machine 11 consists of a drawn (or self-propelled) means 14 suitable to support, in this case, four reels 15 to feed four conductors 12, and a braking assembly 16 consisting of a brake with two driven drums or capstans, respectively 17 and 18, around which the conductors 12 are wound before they are arranged on the couplers 19.

On the drawn means 14, which functions as a traction winch, a programmable control station 20 is arranged, comprising assemblies able to synchronize the speed of advance of the means 14 with the speed of rotation of the drums 17, 18.

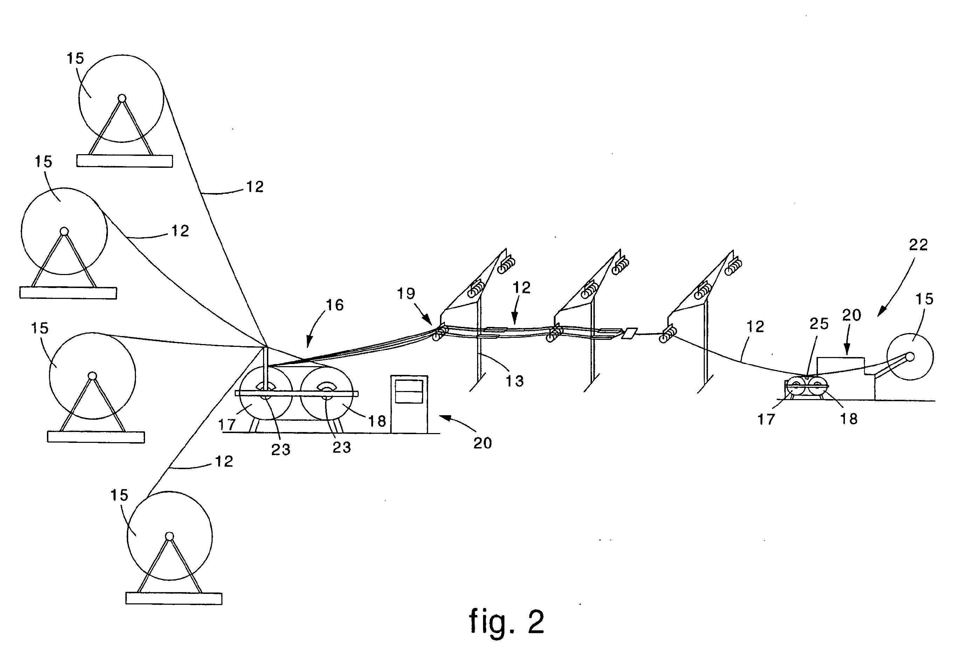

Fig. 2, where the same reference numbers are used for equal elements, or elements having the same function as those in Fig. 1, shows a fixed apparatus 10 for stretching high, medium or low tension aerial electric lines.

The apparatus 10 comprises four feed reels 15 and a braking assembly 16 with two drums 17, 18 arranged on the ground at one end of the section involved in the laying of the conductors 12, and a traction winch 22 with two drums 17 and 18 arranged at the other end of the section.

The control station 20 comprises at least a panel 30 by which the operator can set and read data and parameters relating to the functioning of the machines 10, 11 and a processing unit 29 able to condition the drive of all the drive means which act on the assemblies 16, 22 and on the rotation of the reels 15.

The drums 17, 18, in conventional manner, have circumferential throats inside which at least a respective conductor 12 is able to wind, from the inside to the outside of the relative drum 17 and 18, until it emerges from one side and above the drum to be progressively arranged on the couplers 19.

The drums 17, 18 of the braking assembly 16 and the traction assembly 22 are mounted on respective supporting shafts 23 associated in conventional manner with a drive means (not shown here), normally of the hydraulic or electric type, by means of suitable motion transmission means; the functioning of the motor means is subordinate to the command of the control station 20. These motion transmission means, which are not shown since they are not relevant for the invention, are associated with an electric or hydraulic power transmission unit 24 controlled by the station 20.

According to the invention, in cooperation with at least one of the supporting shafts 23 of the drums 17, 18 of the braking assembly 16 and/or the traction assembly 22 there are means 25 able to detect the tension of the conductor 12 emerging from the drum 17, 18.

The means 25 comprise at least an element sensitive to mechanical pressure, such as a load cell 26, suitable to detect the pressure which the conductor 12 exerts on said supporting shaft 22 during the outlet step from the relative drum 17, 18, and to send an electric signal relating to this pressure value to the control station 20.

Any other element sensitive to a parameter which can be univocally ascribed to the tension of the conductor 12, for example to the flexion or torsion of the supporting shaft 12, can be used instead of the load cell 26.

In cooperation with at least one of the drums 17, 18 of the braking 16 and/or traction 22 assemblies there is at least a device able to detect the speed of rotation thereof, such as for example an encoder 27 or other similar or equivalent device, suitable to generate an electric signal which can be univocally ascribed to said speed of rotation and to send it to the control station 20.

In cooperation with at least part of the reels 15 to feed the conductors 12 there is a level sensor 28 able to detect how full the relative reel 15 is, to generate an electric signal relating to said level and to send this signal to the control station 20. The level sensor 28 can consist of an oscillating roller arranged in peripheral contact with the coils of conductors 12 wound onto the reel, of an optical sensor, a magnetic sensor, or of any other means suitable for the purpose.

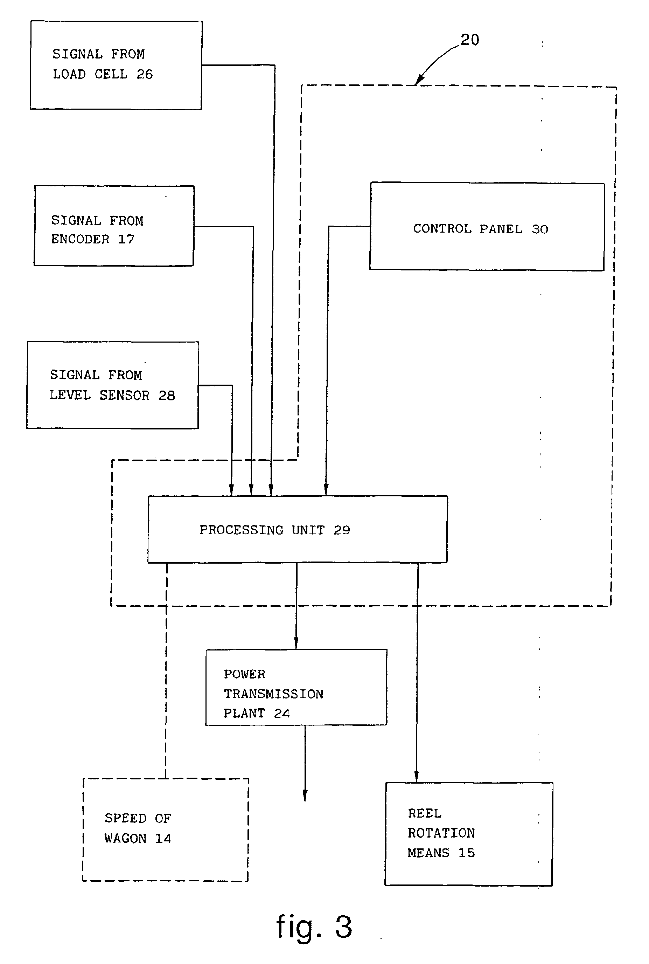

The electric signals generated by these detector devices 26, 27 and 28 are processed by the processing unit 29, which is suitable to detect the actual value of the tension of the conductor 12 during the laying stage. Said processing unit 29 also receives the signal relating to the desired traction as set by the operator by means of the control panel 20 (Fig. 3).

The processing unit 29 is therefore able to compare, continuously or periodically, the value of tension set by the operator with the actual value measured by the detectors 26, 27 and 28; this unit 29 is then able to act in feedback on the power transmission unit 24 to correct the functioning of the drive means of the braking assembly 16 and/or the traction assembly 22, if there are discrepancies between said values and until such discrepancies are cancelled.

In the preferential embodiment shown here, said processing unit 29 is also able to act on the means which make the reels 15 rotate, in order to condition the value of counter-traction according to said discrepancies found between the set tension and measured tension.

In applications on equipment for stretching electric lines for railways or tramways, the processing unit 29 is suitable to act on the drive speed of the means 14 too, in order to regulate the speed of unwinding of the conductors 12 according to the tension detected.

In this way, with this invention, the tension of the conductors 12 during stretching can be constantly maintained at pre-set values, preventing every need for burdensome controls and adjustments later, and ensuring that the legislation in force and optimum laying parameters are respected.

The invention as described heretofore can be applied not only to the cases shown, but also to any braking/traction device 16, fixed or mobile, used to stretch high, medium or low tension electric lines, either aerial or underground.

Modifications and variants can be made to the present invention which are obvious to the person of skill in the art and which will all come within the field of the invention as defined in the attached claims.

## Claims

1. Method to regulate the tension for stretching machines (10, 11) comprising means (15) to feed at least a conductor (12), cable or optical fibre to be stretched, at least a braking assembly (16) and at least a traction assembly (22), said braking/traction assemblies (16, 22) comprising at least a drum (17, 18) on which said conductor (12) is able to wind, said drum (17, 18) comprising at least a supporting shaft (23), **characterized in that** it comprises the following steps:
- during the stretching of the conductors (12), a plurality of electric signals are detected, said signals arriving from at least one of either the braking assembly (16), the traction assembly (22) or the feed assembly (15) of the conductors (12) to be stretched,
wherein one of the plurality of the electric signals is generated by at least a detector element (25) arranged in cooperation with the shaft (23) to measure the thrust or the torsion or the flection which acts on the shaft (23) of at least one drum (17, 18) of the braking assembly (16) and/or the traction assembly (22),
and another electric signal to detect the tension is generated by means (28) to measure how full are the feed means (15) of the conductors (12) being wound,
- the electric signals are sent to a processing unit (29) suitable to calculate therefrom an actual value of tension of the conductors (12) during the stretching step,
- the actual value is compared with a setting value pre-set at the start of the stretching operation,
- a feedback action is made on the drive members of at least one of either the braking assembly (16), the traction assembly (22) or the feed assembly (15) to correct possible discrepancies between the value of tension detected and the pre-set value.

2. Method as in claim 1, **characterized in that** it provides that an electric signal to detect the tension is generated by at least a device (27) to detect the speed of rotation of at least one drum (17, 18) of the braking assembly (16) and/or of the traction assembly (22).

3. Method as in claim 1 or 2, wherein said stretching machine (11) comprises a means (14) movable along the section involved in the laying of the conductors (12) and supporting at least said braking assembly (16) and said feed assembly (15), **characterized in that** it provides that said processing unit (29) acts in feedback on the means which regulate the drive speed of said means (14).

4. Method as in claim 1, **characterized in that** said feedback action is performed automatically by means of said processing unit (29).

5. Method as in claim 1, **characterized in that** said detection of the tension and said feedback action occur continuously.

6. Method as in claim 1, **characterized in that** said detection of the tension and said feedback action occur periodically at an adjustable period.

7. Apparatus to regulate the tension for stretching machines (10, 11) comprising means (15) to feed at least a conductor (12), cable or optical fibre to be stretched, at least a braking assembly (16) and at least a traction assembly (22), said braking/traction assemblies (16, 22) comprising at least a drum (17, 18) on which said conductor (12) is able to wind, said drum (17, 18) comprising at least a supporting shaft (23), **characterized in that** it comprises means to detect the tension (25) arranged in cooperation with the shaft to measure the thrust or the torsion or the flection which acts on the shaft (23) of at least one drum (17, 18) of the braking assembly (16) and/or the traction assembly (22), means (27) to detect the speed of rotation of at least one drum (17, 18) of the braking assembly (16) and/or the traction assembly (22), means (28) able to detect how full are the means (15) to feed the conductors (12), and a processing unit (29) suitable to receive electric signals from said tension detection means (25, 27) and from said fullness detection means (28), to process them and to compare the value of tension detected with a value of tension set by the operator, said processing unit (29) also being suitable to intervene in feedback on the drive means of at least one of either the braking assembly (16) or the traction assembly (22) in order to correct any discrepancies between the value of tension detected and the pre-set value.

8. Apparatus as in claim 7, **characterized in that** said tension detection means (25) arranged in cooperation with the shaft (23) of at least one drum (17, 18) comprise at least an element able to measure the force of thrust generated on said shaft (23) by said conductor (12) being wound.

9. Apparatus as in claim 8, **characterized in that** said element able to measure the force of thrust generated on said shaft (23) comprises at least a load cell (26).

10. Apparatus as in claim 7, **characterized in that** said tension detection means (25) arranged in cooperation with the shaft (23) of at least one drum (17, 18) comprise at least an element able to measure the flexion or torsion generated on said shaft (23) by said conductor (12) being wound.

11. Apparatus as in claim 7, **characterized in that** said means to detect the speed of rotation of at least one drum (17, 18) of the braking assembly (16) and/or the traction assembly (22) comprise at least an encoder (27).

12. Apparatus as in claim 7, **characterized in that** said means able to detect how full are the means (15) to feed the conductors (12) being wound comprise at least an oscillating roller (28) arranged in peripheral contact with the coils of the reel being wound.

13. Apparatus as in any claim from 7 to 12 inclusive, **characterized in that** it comprises a control station (20) including at least a panel (30) on which the operator can set and read data and parameters relating to the functioning of said machines (10, 11), said control panel (30) being functionally connected to said processing unit (29) to send therefrom at least the value of tension of the conductors (12) as pre-set by the operator.

14. Apparatus as in any claim from 7 to 13 inclusive, **characterized in that** it comprises a power transmission unit (24) functionally connected at inlet to the processing unit (29) and at outlet to the drive members of at least one of either the braking assembly (16) or the traction assembly (22) in order to regulate in feedback the functioning of said assemblies (16, 22).

15. Apparatus as in claim 7, comprising a means (14) movable along the section involved in the laying of the conductors (12) and supporting at least said braking assembly (16) and said feed assembly (15), **characterized in that** said processing unit (29) is able to act in feedback on the drive means of said movable means (14) in order to regulate the speed of advance thereof according to the difference in pressure detected.

## Patentansprüche

1. Verfahren zum Regeln der Spannung in Dehnungsmaschinen (10, 11), aufweisend Mittel (15) zum Zuführen zumindest eines zu dehnenden Leiters (12), eines zu dehnenden Kabels oder einer zu dehnenden optischen Faser, zumindest eine Bremsanordnung (16) und zumindest eine Zuganordnung (22), wobei die Brems-/Zuganordnungen (16, 22) zumindest eine Trommel (17, 18) aufweisen, auf der sich der Leiter (12) winden kann, wobei die Trommel (17, 18) zumindest einen stützenden Schaft (23) aufweist, wobei das Verfahren **dadurch gekennzeichnet ist, dass** es die folgenden Schritte aufweist:
- während des Dehnens der Leiter (12) werden eine Vielzahl von elektrischen Signalen detektiert, wobei die Signale ankommen aus zumindest einer von entweder der Bremsanordnung (16), der Zuganordnung (22) oder der Zuführanordnung (15) der zu dehnenden Leiter (12),
wobei eines der Vielzahl von elektrischen Signalen durch zumindest ein Detektorelement (25) erzeugt wird, welches in Zusammenwirkung mit dem Schaft (23) angeordnet ist, um die Schubkraft oder die Torsion oder die Biegung, die auf den Schaft (23) von zumindest einer Trommel (17, 18) der Bremsanordnung (16) und/oder der Zuganordnung (22) wirkt, zu messen,
und ein anderes elektrisches Signal zum Detektieren der Spannung erzeugt wird durch Mittel (28) zum Messen, wie gefüllt die Zuführmittel (15) der Leiter (12) sind, die gewunden werden,
- die elektrischen Signale werden zu einer Verarbeitungseinheit (29) gesendet, die geeignet ist, daraus einen gegenwärtigen Wert der Spannung der Leiter (12) während des Dehnungsschritt zu berechnen,
- der gegenwärtige Wert wird mit einem vor dem Beginn des Dehnungsvorgangs voreingestellten Einstellwert verglichen,
- eine Rückkopplungsmaßnahme wird an den Antriebselementen von zumindest einer von entweder der Bremsanordnung (16), der Zuganordnung (22) oder der Zuführanordnung (15) vorgenommen, um mögliche Diskrepanzen zwischen dem detektierten Spannungswert und dem voreingestellten Wert zu korrigieren.

2. Verfahren nach Anspruch 1, **dadurch gekennzeichnet, dass** es vorsieht, dass ein elektrisches Signal zum Detektieren der Spannung durch zumindest ein Gerät (27) erzeugt wird, um die Rotationsgeschwindigkeit von zumindest einer Trommel (17, 18) der Bremsanordnung (16) und/oder der Zuganordnung (22) zu detektieren.

3. Verfahren nach Anspruch 1 oder 2, wobei die Dehnungsmaschine (11) ein Mittel (14) aufweist, das beweglich ist entlang eines Abschnitts, der beteiligt ist bei dem Verlegen der Leiter (12), und zumindest die Bremsanordnung (16) und die Zuführanordnung (15) stützt, **dadurch gekennzeichnet, dass** es vorsieht, dass die Verarbeitungseinheit (29) in Rückkopplung auf die Mittel wirkt, welche die Antriebsgeschwindigkeit der Mittel (14) regeln.

4. Verfahren nach Anspruch 1, **dadurch gekennzeichnet, dass** die Rückkopplungsmaßnahme automatisch durch Mittel der Verarbeitungseinheit (29) durchgeführt wird.

5. Verfahren nach Anspruch 1, **dadurch gekennzeichnet, dass** die Detektion der Spannung und die Rückkopplungsmaßnahme kontinuierlich erfolgen.

6. Verfahren nach Anspruch 1, **dadurch gekennzeichnet, dass** die Detektion der Spannung und die Rückkopplungsmaßnahme periodisch mit einer anpassbaren Periode erfolgen.

7. Vorrichtung zum Regeln der Spannung in Dehnungsmaschinen (10, 11), aufweisend Mittel (15) zum Zuführen zumindest eines zu dehnenden Leiters (12), eines zu dehnenden Kabels oder einer zu dehnenden optischen Faser, zumindest eine Bremsanordnung (16) und zumindest eine Zuganordnung (22), wobei die Brems/Zuganordnungen (16, 22) zumindest eine Trommel (17, 18) aufweisen, auf welcher sich der Leiter (12) winden kann, wobei die Trommel (17, 18) zumindest einen stützenden Schaft (23) aufweist, wobei die Vorrichtung **dadurch gekennzeichnet ist, dass** sie aufweist Mittel zum Detektieren der Spannung (25), die in Zusammenwirkung mit dem Schaft angeordnet sind, um die Schubkraft oder die Torsion oder die Biegung, die auf den Schaft von zumindest einer Trommel (17, 18) der Bremsanordnung (16) und/oder der Zuganordnung (22) wirkt, zu messen, Mittel (27) zum Detektieren der Rotationsgeschwindigkeit von zumindest einer Trommel (17, 18) der Bremsanordnung (16) und/oder der Zuganordnung (22), Mittel (28), die geeignet sind, zu detektieren, wie gefüllt die Mittel (15) zum Zuführen der Leiter (12) sind, und eine Verarbeitungseinheit (29), die geeignet ist, elektrische Signale von den Spannungsdetektionsmitteln (25, 27) und von den Füllungsdetektionsmitteln (28) zu empfangen, diese zu verarbeiten und den detektierten Spannungswert mit einem von dem Bediener eingestellten Spannungswert zu vergleichen, wobei die Verarbeitungseinheit (29) auch geeignet ist, in Rückkopplung in die Antriebsmittel von zumindest einer von entweder der Bremsanordnung (16) oder der Zuganordnung (22) einzugreifen, um jegliche Diskrepanzen zwischen dem detektierten Spannungswert und dem voreingestellten Wert zu korrigieren.

8. Vorrichtung nach Anspruch 7, **dadurch gekennzeichnet, dass** die Spannungsdetektionsmittel (25), die in Zusammenwirkung mit dem Schaft von zumindest einer Trommel (17, 18) angeordnet sind, zumindest ein Element aufweisen, das geeignet ist, die durch den Leiter (12), welcher gewunden wird, auf dem Schaft (23) erzeugte Schubkraft zu messen.

9. Vorrichtung nach Anspruch 8, **dadurch gekennzeichnet, dass** das Element, welches geeignet ist, die auf dem Schaft (23) erzeugte Schubkraft zu messen, zumindest eine Wägezelle (26) aufweist.

10. Vorrichtung nach Anspruch 7, **dadurch gekennzeichnet, dass** die Spannungsdetektionsmittel (25), die in Zusammenwirkung mit dem Schaft (23) von zumindest einer Trommel (17, 18) angeordnet sind, zumindest ein Element aufweisen, das geeignet ist, die durch den Leiter (12), der gewunden wird, auf dem Schaft (23) erzeugte Biegung oder Torsion zu messen.

11. Vorrichtung nach Anspruch 7, **dadurch gekennzeichnet, dass** die Mittel zum Detektieren der Rotationsgeschwindigkeit von zumindest einer Trommel (17, 18) der Bremsanordnung (16) und/oder der Zuganordnung (22) zumindest einen Encoder (27) aufweisen.

12. Vorrichtung nach Anspruch 7, **dadurch gekennzeichnet, dass** die Mittel, die geeignet sind, zu detektieren, wie gefüllt die Mittel (15) zum Zuführen der Leiter (12) sind, welche gewunden werden, zumindest eine oszillierenden Rolle (28) aufweisen, die in peripherem Kontakt mit den Windungen des Bands sind, welches gewunden wird.

13. Vorrichtung nach einem der Ansprüche von 7 bis einschließlich 12, **dadurch gekennzeichnet, dass** sie eine Steuerungsstation (20) aufweist, welche zumindest ein Panel (30) umfasst, auf dem der Bediener Daten und Parameter betreffend den Betrieb der Maschinen (10, 11) einstellen und lesen kann, wobei das Steuerungspanel (30) funktional mit der Verarbeitungseinheit (29) verbunden ist, um davon zumindest den Spannungswert der Leiter (12), wie von dem Bediener voreingestellt, zu übermitteln.

14. Vorrichtung nach einem der Ansprüche von 7 bis einschließlich 13, **dadurch gekennzeichnet, dass** sie eine Leistungsübertragungseinheit (24) aufweist, die funktional am Eingang zu der Verarbeitungseinheit (29) und am Ausgang zu den Antriebselementen von zumindest einer von entweder der Bremsanordnung (16) oder der Zuganordnung (22) verbunden ist, um die Arbeitsweise der Anordnungen (16, 22) in Rückkopplung zu regeln.

15. Vorrichtung nach Anspruch 7, aufweisend ein Mittel (14), das entlang des Abschnitts bewegbar ist, welcher beteiligt ist bei dem Verlegen der Leiter (12), und zumindest die Bremsanordnung (16) und die Zuführanordnung (15) stützt, **dadurch gekennzeichnet, dass** die Verarbeitungseinheit (29) geeignet ist, in Rückkopplung auf die Antriebsmittel der bewegbaren Mittel (14) zu wirken, um die Vortriebsgeschwindigkeit davon gemäß dem detektierten Druckunterschied zu regeln.

## Revendications

1. Procédé de régulation de la tension pour des machines à étirer (10, 11) comprenant des moyens (15) de fourniture d'au moins un conducteur (12), câble ou fibre optique à étirer, au moins un ensemble de freinage (16) et au moins un ensemble de traction (22), lesdits ensembles de freinage/traction (16, 22) comprenant au moins un tambour (17, 18) sur lequel ledit conducteur (12) peut s'enrouler, ledit tambour (17, 18) comprenant au moins un arbre de support (23), **caractérisé en ce qu'**il comprend les étapes suivantes :
- pendant l'étirage des conducteurs (12), une pluralité de signaux électriques est détectée, lesdits signaux provenant d'au moins l'un de l'ensemble de freinage (16), de l'ensemble de traction (22), ou de l'ensemble de fourniture (15) des conducteurs (12) à étirer,
dans lequel l'un de la pluralité de signaux électriques est généré par au moins un élément détecteur (25) agencé en coopération avec l'arbre (23) afin de mesurer la poussée ou la torsion ou la flexion qui agit sur l'arbre (23) d'au moins un tambour (17, 18) de l'ensemble de freinage (16) et/ou de l'ensemble de traction (22),
et un autre signal électrique destiné à détecter la tension est généré par un moyen (28) de mesure du niveau de remplissage des moyens de fourniture (15) des conducteurs (12) enroulés,
- les signaux électriques sont envoyés à une unité de traitement (29) adaptée pour calculer à partir de ceux-ci une valeur réelle de tension des conducteurs (12) pendant l'étape d'étirage,
- la valeur réelle est comparée à une valeur de réglage préétablie au démarrage de l'opération d'étirage,
- une action de rétroaction est réalisée sur les organes d'entraînement d'au moins l'un de l'ensemble de freinage (16), de l'ensemble de traction (22), ou de l'ensemble de fourniture (15) afin de corriger des écarts possibles entre la valeur de tension détectée et la valeur préétablie.

2. Procédé selon la revendication 1, **caractérisé en ce qu'**il prévoit qu'un signal électrique destiné à détecter la tension soit généré par au moins un dispositif (27) afin de détecter la vitesse de rotation d'au moins un tambour (17, 18) de l'ensemble de freinage (16) et/ou de l'ensemble de traction (22).

3. Procédé selon la revendication 1 ou 2, dans lequel ladite machine d'étirage (11) comprend un moyen (14) mobile le long de la section impliquée dans la pose des conducteurs (12) et le support d'au moins ledit ensemble de freinage (16) et ledit ensemble de fourniture (15), **caractérisé en ce qu'**il prévoit que ladite unité de traitement (29) agisse en rétroaction sur les moyens qui régulent la vitesse d'entraînement dudit moyen (14).

4. Procédé selon la revendication 1, **caractérisé en ce que** ladite action de rétroaction est réalisée automatiquement au moyen de ladite unité de traitement (29).

5. Procédé selon la revendication 1, **caractérisé en ce que** ladite détection de la tension et ladite action de rétroaction ont lieu de façon continue.

6. Procédé selon la revendication 1, **caractérisé en ce que** ladite détection de la tension et ladite action de rétroaction ont lieu périodiquement à une période ajustable.

7. Appareil de régulation de la tension pour des machines à étirer (10, 11), comprenant des moyens (15) de fourniture d'au moins un conducteur (12), câble ou fibre optique à étirer, au moins un ensemble de freinage (16) et au moins un ensemble de traction (22), lesdits ensembles de freinage/traction (16, 22) comprenant au moins un tambour (17, 18) sur lequel ledit conducteur (12) peut s'enrouler, ledit tambour (17, 18) comprenant au moins un arbre de support (23), **caractérisé en ce qu'**il comprend un moyen de détection de la tension (25) agencé en coopération avec l'arbre afin de mesurer la poussée ou la torsion ou la flexion qui agit sur l'arbre (23) d'au moins un tambour (17, 18) de l'ensemble de freinage (16) et/ou l'ensemble de traction (22), un moyen (27) de détection de la vitesse de rotation d'au moins un tambour (17, 18) de l'ensemble de freinage (16) et/ou l'ensemble de traction (22), un moyen (28) capable de de détecter le niveau de remplissage des moyens (15) de fourniture des conducteurs (12), et une unité de traitement (29) adaptée pour recevoir des signaux électriques en provenance dudit moyen de détection de la tension (25, 27) et en provenance dudit moyen de détection du niveau de remplissage (28), afin de les traiter et de comparer la valeur de tension détectée à une valeur de tension établie par l'opérateur, ladite unité de traitement (29) étant également adaptée pour intervenir en rétroaction sur le moyen d'entraînement d'au moins l'un de l'ensemble de freinage (16) ou de l'ensemble de traction (22) afin de corriger tout écart entre la valeur de tension détectée et la valeur préétablie.

8. Appareil selon la revendication 7, **caractérisé en ce que** ledit moyen de détection de la tension (25) agencé en coopération avec l'arbre (23) d'au moins un tambour (17, 18) comprend au moins un élément capable de mesurer la force de poussée générée sur ledit arbre (23) par ledit conducteur (12) enroulé.

9. Appareil selon la revendication 8, **caractérisé en ce que** ledit élément capable de mesurer la force de poussée générée sur ledit arbre (23) comprend au moins une cellule de chargement (26).

10. Appareil selon la revendication 7, **caractérisé en ce que** ledit moyen de détection de la tension (25) agencé en coopération avec l'arbre (23) d'au moins un tambour (17, 18) comprend au moins un élément capable de mesurer la flexion ou la torsion générée sur ledit arbre (23) par ledit conducteur (12) enroulé.

11. Appareil selon la revendication 7, **caractérisé en ce que** ledit moyen de détection de la vitesse de rotation d'au moins un tambour (17, 18) de l'ensemble de freinage (16) et/ou de l'ensemble de traction (22) comprend au moins un encodeur (27).

12. Appareil selon la revendication 7, **caractérisé en ce que** ledit moyen capable de détecter le niveau de remplissage des moyens (15) de fourniture des conducteurs (12) enroulés comprend au moins un rouleau oscillant (28) agencé en contact périphérique avec les bobines de l'enrouleur enroulées.

13. Appareil selon l'une quelconque des revendications 7 à 12 comprise, **caractérisé en ce qu'**il comprend une station de commande (20) comprenant au moins un panneau (30) sur lequel l'opérateur peut régler et lire des données et des paramètres relatifs au fonctionnement desdites machines (10, 11), ledit panneau de commande (30) étant fonctionnellement connecté à ladite unité de traitement (29) afin d'envoyer de cette dernière au moins la valeur de tension des conducteurs (12) telle que préétablie par l'opérateur.

14. Appareil selon l'une quelconque des revendications 7 à 13 comprise, **caractérisé en ce qu'**il comprend une unité de transmission d'énergie (24) fonctionnellement connectée au niveau d'une admission à l'unité de traitement (29) et au niveau du refoulement aux organes d'entraînement d'au moins l'un de l'ensemble de freinage (16) ou de l'ensemble de traction (22) afin de réguler en rétroaction le fonctionnement desdits ensembles (16, 22).

15. Appareil selon la revendication 7, comprenant un moyen (14) mobile le long de la section impliquée dans la pose des conducteurs (12) et supportant au moins ledit ensemble de freinage (16) et ledit ensemble de fourniture (15), **caractérisé en ce que** ladite unité de traitement (29) est capable d'agir en rétroaction sur le moyen d'entraînement dudit moyen mobile (14) afin de réguler sa vitesse d'avancée selon la différence de pression détectée.
